(19) Europäisches Patentamt

European Patent Office

Office européen des brevets

(11) Veröffentlichungsnummer: **0 267 304**
**A1**

(12) **EUROPÄISCHE PATENTANMELDUNG**

(21) Anmeldenummer: **86115578.6**

(22) Anmeldetag: **10.11.86**

(51) Int. Cl.⁴: **H01S 3/03** , **H01J 9/02**

(43) Veröffentlichungstag der Anmeldung:
**18.05.88 Patentblatt 88/20**

(84) Benannte Vertragsstaaten:
**CH DE FR GB IT LI NL SE**

(71) Anmelder: **LITEF GmbH**
**Lörracher Strasse 18**
**D-7800 Freiburg/Br.(DE)**

(72) Erfinder: **Tschanun, Wolfgang, Dr.**
**Malteserordensstrasse 1e**
**D-7802 Merzhausen(DE)**

(74) Vertreter: **Patentanwälte TER MEER - MÜLLER**
**- STEINMEISTER**
**Mauerkircherstrasse 45**
**D-8000 München 80(DE)**

(54) **Verfahren zur Herstellung von Laser-Kathoden.**

㉗ Das Verfahren zur Herstellung von Laser-Katho-den mittels eines Vakuumbeschichtungsprozesses sieht ein gut gesteuertes langsames Schichtwachs-tum unter gleichzeitiger Anwesenheit des Laser-Gases bei einem Gesamtdruck von bis zu $5 \times 10^{-4}$ mbar vor. Dadurch wird bereits vor dem Betrieb des Lasers die Einlagerung von Laser-Gasatomen in die Kathodenschicht begünstigt. Ohne das Vakuum zu brechen, wird die beschichtete Kathode dann in eine zweite Position überführt und über eine Düse (7) wird Laser-Gas unter geringem Druck gegen die Kathodenbeschichtung (4) eingeleitet. Gleichzeitig werden über die elektrisch leitende Unterlage (2) für den Kathodengrundkörper (1) und eine konzentrisch zur Düse (7) angeodnete Elektrode (8) mehrere Ent-ladungszyklen ausgelöst, die durch vorzeitiges Ab-sputtern eine Einebnung der Stromdichte und ein weiteres Einlagern von Inertgasatomen in die Al-Be-schichtung (4) bewirken. Nach mehreren Entladungs-zyklen kann außerdem eine geringe Menge Sauer-stoff beigegeben werden, so daß noch vor dem Fluten des Rezipienten eine $Al_2O_3$-Passivierungs-schicht gebildet wird.

Durch das Verfahren wird die Betriebszu-verlässigkeit und Langzeitstabilität von Laser-Ver-stärkern und Laser-Oszillatoren wesentlich erhöht.

**FIG. 2**

## Verfahren zur Herstellung von Laser-Kathoden

Die Erfindung betrifft ein Verfahren zur Herstellung von Laser-Kathoden, bei dem ein im wesentlichen halbkugelförmiger Grundkörper aus einem Glas-oder Glaskeramikmaterial mit bestimmten Wärmeeigenschaften innenseitig mittels eines Vakuumbeschichtungsverfahrens mit einer Aluminium-oder Aluminiumlegierungsbeschichtung (im folgendern "Al-Beschichtung") versehen wird.

Laser-Kathoden der hier in Rede stehenden Art mit einem Grundkörper aus Glas oder Glaskeramik und einer haubenförmigen Gestalt mit halbkugelförmiger Haubenwölbung sind in der DE-Al-33 46 232 beschrieben. Solche Laser-Kathoden finden vor allem für Laser-Verstärker bzw. Laser-Oszillatoren Anwendung. Im Laser-Betrieb wird die Laser-Kathode auf negatives Potential gelegt und durch positiv aufgeladene Ionen, z. B. He$^+$ und Ne$^+$ bombardiert, die sich aufgrund des vorhandenen negativen Potentials mit den Elektronen vereinigen, die der (oxidierten) inneren Oberfläche der Kathode zugeführt werden, so daß durch diese Rekombination wieder ungeladene Gasmoleküle entstehen. Beim Aufprall der Ionen auf die Kathodenoberfläche kommt es zu Sputterprozessen an der Oberfläche sowie zur Absorption von leichten inerten Gasen, wie z. B. von He und Ne. Dies führt zu einer Verminderung der Lebensdauer der Kathode und damit zu der gesamten Laser-Anordnung, da die folgenden Sputtererscheinungen das Laser-Gas laufend verunreinigen.

Bei den bisher angewandten Prozessen wurde nach der Beschichtung beim Öffnen der Beschichtungsanlage die Kathode nicht reproduzierbar natürlich aufoxidiert. Es wurde zwar bereits versucht, die Lebensdauer der Kathode durch ein Nachoxidieren der aufgebrachten Al-Schicht, insbesondere durch Einleiten von reinem Sauerstoff und Sauerstoff-Inertgasgemisch nachzubehandeln. Dies führt aber einerseits nur zu einem begrenzten Erfolg und hat andererseits den Nachteil, daß bei diesem Sauerstoffbeladungsprozeß in situ auch die Spiegel der Laser-Anordnung in Mitleidenschaft gezogen werden.

Der Erfindung liegt damit die Aufgabe zugrunde, ein Herstellungsverfahren für Laser-Kathoden zu entwickeln, mit dem sich eine wesentlich längere Betriebslebensdauer für mit solchen Kathoden ausgerüstete Laser-Anordnungen erzielen läßt. Außerdem soll eine Sauerstoffnachbehandlung und die damit entstehenden unerwünschten Sekundäreffekte vermieden werden.

Der im Patentanspruch 1 zusammengefaßt definierte Erfindungsgedanke beruht auf der technisch angewendeten Erkenntnis, daß sich unerwünschte Sputtervorgänge und die Einlagerung von Inertgasmolekülen in die Al-Beschichtung bzw. die Ausbildung von lokalen Bereichen hoher Stromdichten und damit weitere Sputtervorgänge dann vermeiden lassen, wenn einerseits insbesondere Inertgasanteile mit niedrigem Atomgewicht wie He oder Ne bereits beim Aufbringen der Al-Beschichtung in diese eingelagert werden und andererseits durch eine Art mehrmaliges "Probezünden" noch im Rezipienten der Vakuumbeschichtungsanlage eine Glättung und Vergleichmäßigung der Al-Beschichtung erreichen läßt und daß beim nachfolgenden Aufoxidieren unter Bildung einer Passivierungsschicht aus Al$_2$O$_3$ eine sehr glatte Kathodenoberfläche erzielt wird. Im Gegensatz zum bisher praktizierten Aufoxidieren der Al-Schicht durch einfaches Öffnen des Rezipienten wird gemäß der Erfindung mit dem langsamen Beladen des Rezipienten mit Sauerstoff am Schluß des Verfahrensprozesses garantiert, daß die gebildete Schicht die Möglichkeit hat, ohne Aufnahme von zusätzlichen Verunreinigungen nochmals inerte Gasanteile in sich zu binden und der Abschluß des Herstellungsprozesses erst danach quasi mit der vollständigen Ausbildung der Al$_2$O$_3$-Schicht als Diffusionssperre abgeschlossen wird.

Die Erfindung und vorteilhafte Einzelheiten werden nachfolgend unter Bezug auf die Zeichnung in beispielsweiser Ausführungsform näher erläutert. Es zeigen:

Fig. 1 in schematischer Schnittdarstellung die Verfahrensschritte der Vakuum-Aluminisierung bei gleichzeitiger Einlagerung von Laser-Gasmolekülen in die Kathodenschicht, und

Fig. 2 den Prozeß der Prüfung des Zündverhaltens mit Glättung der Kathodenoberfläche und langsamem Aufoxidieren der Kathodenoberfläche.

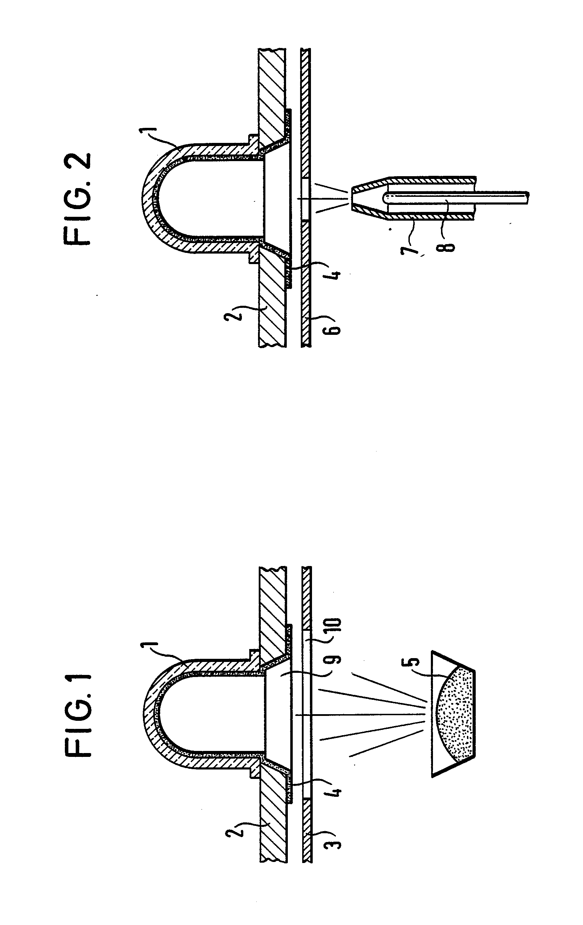

Gemäß der Darstellung der Fig. 1 wird ein bereits durch verschiedene Verfahren, wie Ultraschallreinigung, Ozonreinigung oder auch Handreinigung, gereinigter, im wesentlichen halbkugelförmiger Grundköprer 1 aus einem Glas-oder Glaskeramikmaterial mit bestimmten, für einen Laser-Verstärker-oder Laser-Oszillatorbetrieb geeigneten Wärmeeigenschaften und einem Innendurchmesser von beispielsweise 12,5 mm auf eine Halterung oder Unterlage 2 in einem nicht dargestellten Rezipienten einer Vakuumanlage aufgesetzt. In Ausrichtung auf den Innenraum des Grundkörpers 1 weist die Unterlage 2 eine durchgehende Öffnung 9 auf. Eine unterseitige Maskenabdeckung 3 ist ebenfalls mit einer Öffnung 10 versehen, deren Durchmesser größer ist als der der Durchgangsöffnung 9. Wie schematisch durch Bezugshinweis 5 angedeutet ist, erfolgt die Beschichtung der Innenseite des Grundkörpers 1 von der Unterseite her durch Elektronenstrahlverdampfen oder durch andere Verfahren, wie beispielsweise Sputtern oder thermisches Verdampfen eines für die gewünschten Zwecke geeigneten Al-oder Al-Legierungsmaterials in an sich bekannter Weise. Die Anordnung von Grundkörper 1, Unterlage 2 und Abdeckung 3 sowie die Größe und Ausrichtung der Öffnungen 9 und 10 sind so getroffen, daß außer der Innenfläche des Grundkörpers 1 auch ein Teilbereich der Unterlage 2 Al-beschichtet wird, so daß aus später erläuterten Gründen zwischen der Al-Beschichtung 4 der Laser-Kathode und der Unterlage 2 eine durchgehende elektrische Verbindung hergestellt ist. Die Unterlage 2 besteht voraussetzungsgemäß aus einem elektrisch leitfähigen Material.

Gemäß der erfindungsgemäßen Verfahrensführung wird zunächst der Druck im Rezipienten so weit verringert, daß der Sauerstoffpartialdruck beispielsweise kleiner als $2 \times 10^{-9}$ mbar wird und der Restgasdruck $2 \times 10^{-7}$ mbar nicht übersteigt. Anschließend wird der Rezipient mit wenigstens einem Laser-Gas oder Gasgemisch, z. B. He/Ne, unter geringem Druck bis zu einem Gesamtdruck von beispielsweise $5 \times 10^{-4}$ mbar geflutet. Sodann wird bei geringer Wachs tumsrate die Al-oder Al-Legierungsbeschichtung aufgebracht. Bei diesem langsamen Schichtwachstum unter gleichzeitiger Anwesenheit von Laser-Gas werden Atome des späteren Betriebsgases, also Inertgase, wie Argon, Helium oder Neon, in die Beschichtung eingebaut, so daß sie später nicht mehr in die Schicht eindiffundieren können, weil die Schicht bereits abgesättigt ist.

Der verwendete Beschichtungsprozeß muß gut steuerbar sein, wobei die Anlagerungsrate der Al-Beschichtung unter 1 nm/sec liegen sollte. Ein solches langsames Schichtwachstum gewährleistet, daß ein relativ hoher Inertgasanteil in die Al-Schicht mit eingebaut wird. Dieser hohe Gasuntergrunddruck führt überdies dazu, daß unabhängig vom gewählten Beschichtungsverfahren eine hohe Schichtgleichmäßigkeit über die Innenfläche des Grundkörpers 1 und damit der Kathode sowie eine gute Kantenbedeckung erreicht wird. Die gesamte Schichtdicke sollte ca. 150 nm an der dünnsten Stelle betragen. Die Messung der Anlagerungsrate und der Schichtdicke kann im Bereich der Kathode über eine mit Schwingquarzen ausgerüstete Schichtdicken-Meßvorrichtung erfolgen. Im Falle eines thermischen Verdampfers kann die Schichtdicke ganz einfach über die Masse des zu verdampfenden Materials bestimmt werden.

Nach Beendigung des Beschichtungsprozesses wird die Unterlage 2 samt bereits beschichteter Kathode 1, 4 zusammen mit Abdeckung 6 mit verringerter Öffnung in eine neue Position über einer Düse 7 gebracht, ohne daß dabei das Vakuum gebrochen wird. In dieser Umstellungszeit wird wieder auf den Restgasdruck vor der Beschichtung abgepumpt, um einen möglichst geringen $O_2$-Partialdruck zu erhalten. Anschließend wird über die Düse 7 in den Rezipienten Laser-Gasgemisch eingelassen, bis ein Gesamtdruck von einigen mbar in der Kathode und deren Umgebung erreicht ist. Die Düse 7 besteht aus einem elektrisch nichtleitenden Material und enthält im Inneren in konzentrischer Anordnung eine Elektrode 8, deren Oberfläche beispielsweise mit Edelmetall beschichtet ist.

Sodann wird über den Strompfad Elektrode 8 - inertes Gasgemisch - Al-Beschichtung - Unterlage 2 und (nicht gezeigte) elektrische Durchführungen an der Vakuumanlage von außen eine elektrische Entladung mit Gleich-oder Wechselspannung gezündet. Zweck dieser elektrischen Ladung ist es, die Kathodenschicht 4, deren Oberfläche noch nicht oxidiert ist, mit den Atomen des inerten Gases weiter zu beladen und den für einen späteren Betrieb notwendigen Strom einzuprägen.

Nach wiederholten Abpump-und Zündzyklen wird das mit der elektrischen Entladung einhergehende Absputtern der Al-Atome an Stellen hoher Stromdichte nochmals die Oberfläche glätten, so daß eine Homogenisierung der Betriebsstromdichte erreicht wird.

Nach einigen Zündzyklen kann oder wird dem inerten Gas eine geringe Menge $O_2$ beigegeben, was zum langsamen Aufoxidieren der Al-Oberfläche zu $Al_2O_3$ führt. Dieser Vorgang ist vorsichtig durchzuführen, damit der eingeprägte Strom erhalten bleibt und die in die leitende Schicht eingelagerten Atome der inerten Gase weitestgehend dort verbleiben. Die sich an der Oberfläche bildende $Al_2O_3$-Schicht wirkt gleichzeitig als Diffusionssperre und zeichnet sich durch eine wesentlich geringere Absputterrate gegenüber Al bzw. einer Al-Legierung aus.

Nach Erreichen einer ausreichenden Passivierung mit $O_2$ wird es zweckmäßig sein, unter Bedingungen, bei welchen die Kathode später verwendet wird, noch einige Zündzyklen durchzuführen, um ein sicheres Zünden zu gewährleisten. Damit ist der Herstellungsprozeß abgeschlossen. Die Lagerung der Kathoden sollte außerhalb der Vakuumanlage nur in Inertgas-Atmosphäre erfolgen.

## Ansprüche

1. Verfahren zur Herstellung von Laser-Kathoden, bei dem ein im wesentlichen halbkugelförmiger Grundkörper (1) aus einem Glas-oder Glaskeramikmaterial innenseitig mittels eines Vakuumbeschichtungsverfahrens mit einer Aluminium-oder Aluminiumlegierungsbeschichtung (Al-Beschichtung) versehen wird, **gekennzeichnet durch** folgende Verfahrensschritte:

a) der gereinigte Grundkörper (1) wird im Rezipienten einer Vakuumanlage auf eine elektrisch leitende Unterlage (2) gestellt, die in Ausrichtung auf die zu beschichtende Innenseite des Kathodengrundkörpers (1) eine Öffnung (9) aufweist;

b) der Druck im Rezipienten wird so weit verringert, daß der Sauerstoffpartialdruck kleiner als $2 \times 10^{-9}$ mbar wird und der Restgasdruck $2 \times 10^{-7}$ mbar nicht übersteigt;

c) der Rezipient wird mit wenigstens einem Laser-Gas unter geringem Druck beladen, während im wesentlichen gleichzeitig in einem hinsichtlich der Schichtwachstumsgeschwindigkeit steuerbaren Beschichtungsprozeß die Al-Beschichtung aufgebracht wird, die auch einen Teilbereich der Unterlage (2) bedeckt, so daß eine elektrisch leitende Verbindung zwischen dem beschichteten Grundkörper (1) und der Unterlage (2) entsteht;

d) der Al-beschichtete Grundkörper (1) wird ohne das Vakuum zu brechen im Rezipienten in eine Position über einer Gas-Einlaßvorrichtung (7) gebracht, über die ein Laser-Gasgemisch in den Rezipienten bis zu einem Gesamtdruck von einigen mbar eingelassen wird;

e) es wird über eine in den Rezipienten ragende Zündelektrode (8) eine elektrische Entladung zur über die leitende Unterlage nach außen kontaktierten Al-Beschichtung (4) gezündet, die mehrfach wiederholt wird.

2. Verfahren nach Anspruch 1, **dadurch gekennzeichnet,** daß nach mehreren Entladungsstößen gemäß Verfahrensschritt e) zusätzlich zum Laser-Gas eine geringe Menge an Sauerstoff zur gezielten Aufoxidierung der Beschichtungsoberfläche (4) zu $Al_2O_3$ in den Rezipienten eingeleitet wird.

3. Verfahren nach Anspruch 1, **dadurch gekennzeichnet,** daß die Flutung des Rezipienten mit Laser-Gas während des Beschichtens nach Verfahrensschritt c) bis zu einem Gesamtdruck von $5 \times 10^{-4}$ mbar erfolgt.

4. Verfahren nach Anspruch 1, **dadurch gekennzeichnet,** daß die Al-Beschichtung (4) so gesteuert wird, daß die Anlagerungsrate des Schichtwachstums unter 1 nm/sec beträgt.

5. Verfahren nach Anspruch 1, **dadurch gekennzeichnet,** daß die Al-Schicht (4) bis zu einer minimalen Schichtdicke von 150 nm aufwachsen gelassen wird.

6. Verfahren nach Anspruch 4 oder 5, **dadurch gekennzeichnet,** daß die Anlagerungsrate des Schichtwachstums bzw. die Schichtdicke mittels eines Meßverfahrens unter Verwendung eines Schwingquarzes erfaßt werden.

7. Verfahren nach Anspruch 1, **dadurch gekennzeichnet,** daß als Einlaßvorrichtung (7) für das Laser-Gasgemisch gemäß Verfahrensschritt d) eine Düse aus einem elektrisch nichtleitenden Material verwendet wird, in deren Inneres die Zündelektrode (8) in konzentrischer Anordnung eingesetzt ist.

8. Verfahren nach Anspruch 7, **dadurch gekennzeichnet,** daß die Oberfläche der Zündelektrode (8) mit Edelmetall beschichtet ist.

FIG. 1

FIG. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US-A-4 007 431  (ABBINK et al.)<br>* Zusammenfassung;  Spalte 1, Zeilen 31-39; Spalte 3, Zeilen 7-36; Spalte 4, Zeilen 8-13 * | 1,2 | H 01 S   3/03<br>H 01 J   9/02 |
| D,A | GB-A-2 132 407  (LITTON SYSTEMS INC.)<br>* Seite 1, Zeilen 36-39,98-122; Figur 1 * | 1 | |
| A | US-A-3 904 986  (HERNQVIST)<br>* Figuren * | 1 | |
| A | US-A-4 273 282  (NORVELL et al.)<br>* Ansprüche 1-10; Figuren 2,4 * | 1 | |
| A | GB-A-2 091 481  (SPERRY LTD.)<br>* Zusammenfassung;  Figuren 1,3; Ansprüche 26-30 * | 1,3 | |
| A | APPLIED PHYSICS LETTERS, Band 12, Nr. 11, 1. Juni 1968, Seiten 396,397, New York, US; L.D. LOCKER et al.: "Sputtering of oxide films in plasma anodization of aluminium"<br>* Zusammenfassung * | 1 | |

RECHERCHIERTE SACHGEBIETE (Int. Cl.4)

H 01 S
H 01 J

--- -/-

Der vorliegende Recherchenbericht wurde für alle Patentansprüche erstellt.

| Recherchenort | Abschlußdatum der Recherche | Prüfer |
|---|---|---|
| DEN HAAG | 09-08-1987 | FARNESE G.P. |

Europäisches
Patentamt

**EUROPÄISCHER RECHERCHENBERICHT**

Nummer der Anmeldung

EP  86 11 5578

Seite 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE-A-2 627 611  (LICENTIA PATENT-VERWALTUNGS-GmbH) * Figuren 1,2 * ----- | 7 | |

RECHERCHIERTE SACHGEBIETE (Int. Cl.4)

Der vorliegende Recherchenbericht wurde für alle Patentansprüche erstellt.

| Recherchenort | Abschlußdatum der Recherche | Prüfer |
|---|---|---|
| DEN HAAG | 09-08-1987 | FARNESE G.F. |